# EUROPEAN PATENT APPLICATION

(11) **EP 2 028 405 A1**
(43) Date of publication of application: **25.02.2009**
(21) Application number: 07744385.1
(22) Date of filing: 30.05.2007
(51) Int. Cl.: F16M 7/00, E02D 27/44, E04B 1/41, F16B 35/00

(54) **ANCHOR-INTEGRATED LINER AND DEVICE INSTALLATION METHOD**

(30) Priority: 09.06.2006 JP 2006161183
(71) Applicant: Suehiro-System Co., Ltd., Osaka-shi, Osaka 541-0046 (JP)
(72) Inventor: SUEHIRO, Morio c/o Suehiro-System Co., Ltd., Osaka 541-0046 (JP); SUEHIRO, Hiroyuki, Hyogo 669-1347 (JP)
(74) Representative: Grünecker, Kinkeldey, Stockmair & Schwanhäusser Anwaltssozietät
(86) International application number: PCT/JP2007/060971
(87) International publication number: WO 2007/142092

(57) **Abstract**

It is an object to prevent the occurrence of noise from a hollow of an anchor integrated liner, to facilitate the installation of the anchor integrated liner, and to fix its liner part to its anchor shaft part.

An anchor integrated liner 10 includes: an anchor shaft part 12 which is provided with a shaft 16 embeddable in a concrete foundation 110 on which a base plate 120 of a machine 100 is installed and with a screw part 18; and a liner part 14 which is provided on an end portion of the anchor shaft part 12 to serve as a jig for installing the machine 100, which includes a blind hole 20 having an inside screw screwed to the screw part 18, and which is capable of adjusting an installation position of the machine 100 by having the blind hole 20 screwed to the screw part 18, wherein the anchor shaft part 12 and the liner part 14 are integrally formed, and wherein a filling hole 26 is provided at least in one place or more of a side surface of the liner part 14, the filling hole 26 being for filling a filler in a hollow 30 which is made between the blind hole 20 and the screw part 18 at the time of the screw adjustment by the blind hole 20 and the screw part 18.

## Description

### [Technical Field]

The present invention relates to an anchor integrated liner and a machine installation method especially for accurate position adjustment of a base plate of a machine which is to be installed on a base such as a concrete foundation.

### [Background Art]

When a large machine is placed on a base plate to be installed on a concrete foundation, advance position adjustment of the base plate is necessary. In the conventional position adjustment of the base plate, the horizontal or vertical state is adjusted by the combination of flat liners and taper liners supporting a plurality of places of the base plate. However, the conventional installation positioning by the combination of the flat liners and the taper liners has a problem such as that a long time is required for the work of maintaining accuracy or for curing mortar fixing the liners.

Therefore, the present inventor invented an anchor integrated liner used for installation position adjustment of a base plate, with which even an unskilled worker can very easily install a machine and can make fine adjustment.
[Patent document 1] Japanese Patent No. 3775717

### [Disclosure of the Invention]

### [Problems to Be Solved by the Invention]

In the aforesaid anchor integrated liner, after a blind hole of an anchor shaft part and a screw part of a liner part are screwed to each other for the position adjustment, a gap, that is, a hollow is made on an upper surface of the screw part in the blind hole. The presence of the hollow in the concrete foundation supporting the machine poses a problem that the concrete foundation vibrates to generate noise when the machine operates. Further, after the installation position is adjusted by adjusting the screwing between the liner part and the anchor shaft part, it is necessary to weld the screw part of the anchor shaft part in order to prevent that the liner part rotates to displace the installation position.

Therefore, it is an object of the present invention to facilitate the installation of an anchor integrated liner and fix its liner part to its anchor shaft part. It is another object of the present invention to eliminate a hollow formed inside the liner part.

### [Means for Solving the Problems]

In order to achieve the objects stated above, an anchor integrated liner of the present invention includes: an anchor shaft part which is provided with a shaft embeddable in a concrete foundation on which a base plate of a machine is installed and with a screw part; and a liner part which is provided on an end portion of the anchor shaft part to serve as a jig for installing the machine, which is provided with a blind hole having an inside screw screwed to the screw part and with a smooth mounting surface for the base plate, and which is capable of screw-adjusting an installation position of the machine by having the blind hole screwed to the screw part, wherein the anchor shaft part and the liner part are integrally formed, and wherein a filling hole is provided in at least one place or more of a side surface of the liner part, the filling hole being for filling a filler in a hollow which is made between the blind hole and the screw part at the time of the screw-adjustment by the blind hole and the screw part.

Another anchor integrated liner of the present invention includes: an anchor shaft part which is provided with a shaft embeddable in a concrete foundation on which a base plate of a machine is installed and with a screw part; and a liner part which is provided on an end portion of the anchor shaft part to serve as a jig for installing the machine, which is provided with a blind hole having an inside screw screwed to the screw part and with a smooth mounting surface for the base plate, and which is capable of screw-adjusting an installation position of the machine by having the blind hole screwed to the screw part, wherein the anchor shaft part and the liner part are integrally formed, wherein a filling hole is provided in at least one place or more of a side surface of the liner part, the filling hole being for filling a filler in a hollow which is made between the blind hole and the screw part at the time of the screw-adjustment by the blind hole and the screw part, and wherein a center axis of the blind hole and the screw part and a center axis of the shaft are eccentric to each other.
Still another anchor integrated liner of the present invention includes: an anchor shaft part which is provided with a shaft embeddable in a concrete foundation on which a base plate of a machine is installed and with a screw part; and a liner part which is provided on an end portion of the anchor shaft part to serve as a jig for installing the machine, which is provided with a blind hole having an inside screw screwed to the screw part and with a smooth mounting surface for the base plate, and which is capable of screw-adjusting an installation position of the machine by having the blind hole screwed to the screw part, wherein the anchor shaft part and the liner part are integrally formed, wherein a filling hole is provided in at least one place or more of a side surface of the liner part, the filling hole being for filling a filler in a hollow which is made between the blind hole and the screw part at the time of the screw-adjustment by the blind hole and the screw part, wherein a coupling member is provided between the screw part and the shaft part in the anchor shaft part, and wherein the number of the shafts attached to the coupling member is at least two or more.
In the above cases, the liner part preferably has a polygonal horizontal cross section. A plate larger than a horizontal cross-sectional area of the liner part is preferably attached to a top of the liner part.

A machine installation method of the present invention includes: forming an insertion hole in a part, of a concrete foundation, adjacent to an anchor bolt pressing a base plate of a machine; inserting a shaft of an anchor integrated liner into the insertion hole so as to make a predetermined gap between a lower surface of a screw part of the anchor integrated liner and an upper surface of the concrete foundation, the anchor integrated liner including: an anchor shaft part which is provided with the shaft embeddable in the insertion hole and with the screw part; and a liner part screwed to the screw part and having, on an upper surface, a mounting surface for the machine; horizontally and vertically adjusting the mounting surface; thereafter injecting a fixing material into the gap to form a fixed layer receiving a load in a liner axial direction; adjusting an installation position by adjusting screwing movement of the liner part; and installing the machine on an upper surface of the base plate.

### [Effect of the Invention]

According to the present invention as structured above, at least one filling hole or more are formed for filling the filler into the hollow (gap) which is made between the blind hole of the liner part and the screw part of the anchor shaft part after the installation position of the base plate is adjusted by using the anchor integrated liner. Therefore, after the position of the base plate is adjusted by the anchor integrated liner, the filler is filled into the liner from the filling hole of the liner part, so that the hollow can be closed up. Consequently, the spread of vibration or noise generated by the operation of the machine can be prevented. Further, since the hollow in the blind hole of the liner part is closed up, the blind hole of the liner part and the screw part of the anchor shaft part can be easily fixed. This eliminates a conventionally needed work of welding and fixing the liner part after the position adjustment by the liner part, and prevents the liner part from being displaced due to the vibration when the machine operates.

The center axis of the blind hole and the screw part and the center axis of the shaft are eccentric to each other so that the shaft can keep clear of a reinforcement of the concrete foundation. Therefore, even if the reinforcement of the concrete foundation exists in the anchor insertion position, the anchor integrated liner can be disposed so as to keep clear of the reinforcement without cutting the reinforcement.

The coupling member is provided between the screw part and the shaft in the anchor shaft part and at least two shafts or more are attached to the coupling member so as to be capable of keeping clear of the reinforcement of the concrete foundation. Consequently, even if the reinforcement of the concrete foundation exists in the anchor insertion position, the anchor integrated liner can be disposed so as to keep clear of the reinforcement without cutting the reinforcement, and the center axis of the liner part can be set at the center of the plural shafts, and thus the whole anchor can be stably fixed in a well-balanced manner, which enables accurate adjustment of the base plate.

The liner part is formed to have a cross section in a polygonal shape, for example, a quadrangular shape, a hexagonal shape, an octagonal shape, or the like. This can facilitate a rotation operation of the liner part even when the installation place is narrow.

The plate wider than the cross-sectional area of the liner is attached on the top of the liner part. When the base plate is placed on the liner part, a pressure on a pressure receiving surface of the liner part is preferably smaller in order to lighten a burden to the liner part due to the load. That is, the contact area between the liner part and the base plate is preferably larger. Therefore, by making the diameter of the plate attached on the liner part larger than the diameter of the liner part, it is possible to increase the contact area of the liner part without increasing a screw diameter of the liner part.

According to the machine installation method of the present invention, the shaft is inserted so as to make the predetermined gap between the lower surface of the screw part of the anchor shaft part and the upper surface of the concrete foundation, the mounting surface of the liner part is horizontally or vertically adjusted by a hammer lightly striking it, and thereafter the fixing material which cures in a short time is injected into the gap, thereby forming the fixed layer receiving the load in the liner axial direction. Therefore, the load in the liner axial direction can be received with a surface area of the fixed layer formed around the axis of the anchor shaft part, which makes it possible to increase the strength of the whole anchor shaft part even if its shaft diameter is small. Further, the curing time of the fixing material can be shorter than the curing time of mortar put on the concrete foundation in the conventional horizontal adjustment using a flat liner, and thus it is possible to greatly shorten the time for the installation work of a machine.

### [Brief Description of the Drawings]

[FIG. 1] is a side view of an anchor integrated liner according to an embodiment;
[FIG. 2] is a view seen in the direction of the A-A arrow in FIG. 1;
[FIG. 3] is a cross-sectional view of the anchor integrated liner according to the embodiment;
[FIG. 4] is a view of the construction of the anchor integrated liner according to the embodiment;
[FIGs. 5] are explanatory views of a construction method of the anchor integrated liner according to the embodiment;
[FIG. 6] is a side view of a modification example 1 of the anchor integrated liner according to the embodiment;
[FIG. 7] is a view seen in the direction of the B-B arrow in FIG. 6;
[FIG. 8] is a side view of a modification example 2 of the anchor integrated liner according to the embodiment;
[FIG. 9] is a view seen in the direction of the C-C arrow in FIG. 8;
[FIG. 10] is a cross-sectional view of the modification example 2 of the anchor integrated liner according to the embodiment;
[FIG. 11] is a side view of a modification example 3 of the anchor integrated liner according to the embodiment;
[FIG. 12] is a view seen in the direction of the D-D arrow in FIG. 11;
[FIG. 13] is a cross-sectional view of the modification example 3 of the anchor integrated liner according to the embodiment;
[FIG. 14] is a side view of a modification example 4 of the anchor integrated liner according to the embodiment;
[FIG. 15] is a view seen in the direction of the E-E arrow in FIG. 14;
[FIG. 16] is a side view of the modification example 5 of the anchor integrated liner according to the embodiment;
[FIG. 17] is a view seen in the direction of the F-F arrow in FIG. 16;
[FIG. 18] is a side view of a liner part according to the modification example 5;
[FIG. 19] is a side view of a modification example 6 of the anchor integrated liner according to the embodiment; and
[FIG. 20] is a side view of another modification example 6 of the anchor integrated liner according to the embodiment.

### [Explanation of Codes]

10 ... anchor integrated liner, 12 ... anchor shaft part, 14 ... liner part, 16 ... shaft, 18 ... screw part, 20 ... blind hole, 22 ... mounting surface, 24 ... projection, 26 ... filling hole, 28 ... female screw type of metal expansion anchor, 30 ... hollow, 31 ... fixed layer, 32 ... recession, 34 ... coupling member, 36 ... plate, 100 ... machine, 110 ... concrete foundation, 120 ... base plate, 130 ... anchor bolt

### [Best Mode for Carrying out the Invention]

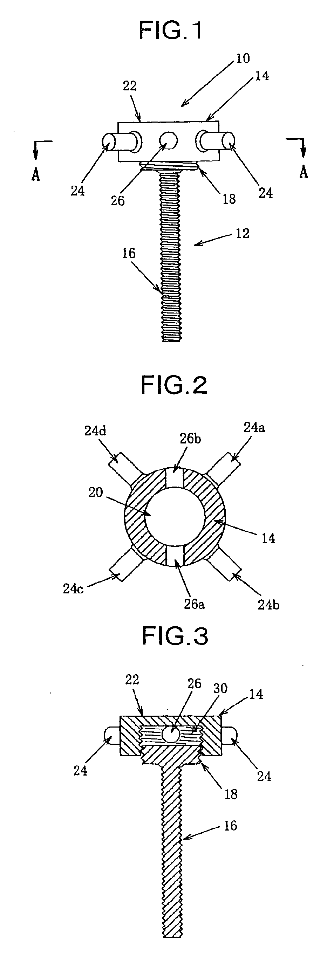

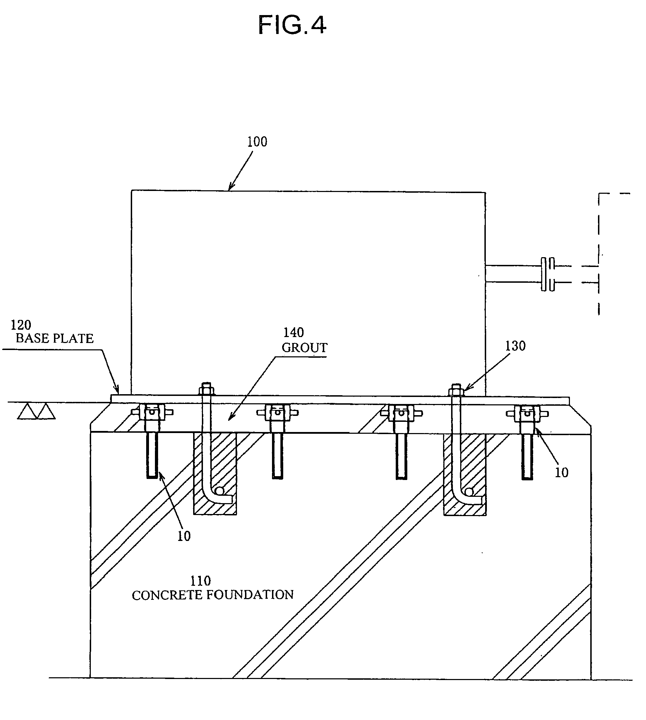

Hereinafter, an embodiment of an anchor integrated liner of the present invention will be described in detail with reference to the accompanying drawings. FIGs. 1 to 3 are explanatory views of the anchor integrated liner according to the embodiment. FIG. 1 shows a side view of the anchor integrated liner. FIG. 2 is a view seen in the direction of the arrow A-A in FIG. 1. FIG. 3 shows a cross-sectional view of the anchor integrated liner. FIG. 4 is a view of the construction of the anchor integrated liner according to the embodiment. As shown in the drawings, the anchor integrated liners 10 are attached between a concrete foundation 110 on which a machine 100 such as an engine is installed and a base plate 120 on which the machine 100 is placed. Further, the plural anchor integrated liners 10 are placed on both sides of the vicinity of installation positions of anchor bolts 130 fixing the machine 100. Here, the anchor bolts 130 support the base plate 120 from an upper surface thereof and the anchor integrated liners 10 support the base plate 120 from under, and thus the anchor bolts 130 and the anchor integrated liners 10 are disposed so as to sandwich the base plate.

As shown in FIGs. 1 to 3, each of the anchor integrated liners 10 has an anchor shaft part 12 and a liner part 14 as its basic structure.
The anchor shaft part 12 is provided with a shaft 16 inserted in an insertion hole formed in the concrete foundation and with a screw part 18 projecting from an upper surface of the concrete foundation. For example, the whole surface of the shaft 16 is thread-milled and the shaft is attached by being screwed to a female screw which is inserted in advance in the insertion hole of the concrete foundation. The screw part 18 is larger in diameter than the shaft 16.

As shown in FIG. 2, the liner part 14 has a circular horizontal cross section, and in its lower surface, a blind hole 20 screwed to the screw part 18 of the anchor shaft part 12 is opened. On an upper surface of the liner part 14, a mounting surface 22 smoothly finished for having a later-described base plate placed thereon is formed. Further, on a cylinder side surface of the liner part 14, projections 24 are formed in a crosswise direction of the horizontal cross section. In this embodiment, the four projections 24 are formed. Further, on the cylinder side surface of the liner part 14, two filling holes 26 for the filler are formed between the projections 24a, 24d, and between 24b and 24c respectively. The filling holes 26a, 26b penetrate from the cylinder side surface of the liner part 14 toward the blind hole 20 in the liner part 14.

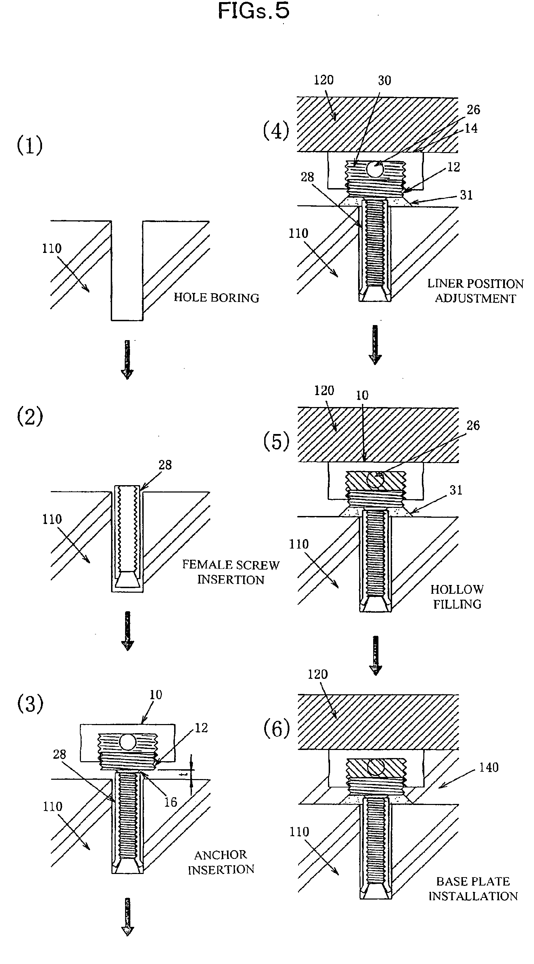

Hereinafter, a description will be given of a method of installing a machine by using the anchor integrated liner 10 as structured above. As an example, this embodiment will describe a case of a centering work of a machine 100 such as an engine connected to a speed reducer. FIGs. 5 are explanatory views of a construction method of the anchor integrated liner according to the embodiment. First, as shown in (1), in an upper surface of the concrete foundation 110 which is to be an installation place of the plural anchor integrated liners 10 supporting the concrete foundation, insertion holes are formed on both sides of each of the anchor bolts. Next, as shown in (2), a female screw type 28 of a metal expansion anchor which is to be screwed to the female thread formed on the shaft 16 of the anchor shaft part 12 is inserted in each of the opened insertion holes. When the female screw type 28 of the metal expansion anchor is inserted up to a bottom of the insertion hole, a tip of the female screw expands due to a wedge on a lower end of the female screw, so that the female screw type 28 of the metal expansion anchor is fixed to an inner wall of the insertion hole. Then, as shown in (3), the anchor integrated liner 10 is inserted in the insertion hole, with the shaft 16 of the anchor shaft part 12 of the anchor integrated liner 10 being screwed to the female screw type 28 of the metal expansion anchor, and with a predetermined gap t being set between a lower surface of the screw part of the anchor shaft part 12 and the upper surface of the concrete foundation. This gap t is preferably set to, for example, 5 mm to 20 mm. Then, as shown in (4), the base plate 120 whose surface in contact with the liner part is smoothly finished is placed on the smooth mounting surface of the liner part 14, and thereafter, the liner part is lightly struck by a hammer so that the base plate 120 becomes horizontal, thereby making the fine adjustment by using a spirit level or the like. After the base plate 120 is kept horizontal, the fixing material is injected into the predetermined gap t between the lower surface of the screw part of the anchor shaft part 12 and the upper surface of the concrete foundation. As the fixing material, it is preferable to use a resin material which cures in a short time, for example, which cures in several minutes to several ten minutes, mortal with compressive strength, or the like. Consequently, the anchor shaft part 12 is fixed on the concrete foundation and the fixed layer 31 is formed. After the anchor shaft part 12 is fixed, the position of the base plate is adjusted by the liner part 14 screwed to the screw part 18 of the anchor shaft part 12. The anchor bolts are temporarily tightened while a centering standard of the engine and the speed reducer is adjusted and the base plate is positioned by the rotation of the liner part 14. At this time, in the anchor integrated liner 10, a gap, that is, a hollow 30 is formed between the blind hole 20 of the liner part 14 and the screw part 18 of the anchor shaft part 12. Therefore, as shown in (5), a filler such as cement milk or a resin material is injected into the hollow 30 from one of the filling holes 26 (26a, 26b) of the liner part 14. After the hollow is closed up by the injected filler and the filler is solidified, the anchor bolts are fully tightened to fix the base plate 120 on the mounting surface of the liner parts 14. Then, as shown in (6), grout (concrete) 140 is filled between the concrete foundation 110 and the base plate 120 to fix the base plate 120. In this manner, the hollow 30 which is formed in the blind hole 20 of the liner part 14 at the time of the position adjustment by the screwing of the liner part 14 and the anchor shaft part 12 of the anchor integrated liner 10 can be closed up by the filler injected from the filling hole 26 provided in the side surface of the liner part 14, so that the spread of the vibration or noise due to the operation of the machine 100 can be prevented. Further, the liner part 14 is fixed when the filler injected in the blind hole 20 of the liner part 14 is solidified, so that the displacement due to the screwing of the screw part 18 and the blind hole 20 can be prevented.

Hitherto, the method of fixing the shaft of the anchor shaft part inserted in the insertion hole of the concrete foundation is described by using the metal expansion anchor (female screw type) for the post-construction anchor, but the method of fixing the shaft in the concrete foundation is not limited to this and may be a method using an adhesive or the like. Further, it has been conventionally difficult to construct the combination of the flat liner and the taper liner in directions other than the vertical direction. However, the anchor integrated liner of the present invention can be attached not only in the vertical direction but also in all the directions (horizontal direction, slanted direction, and the like).

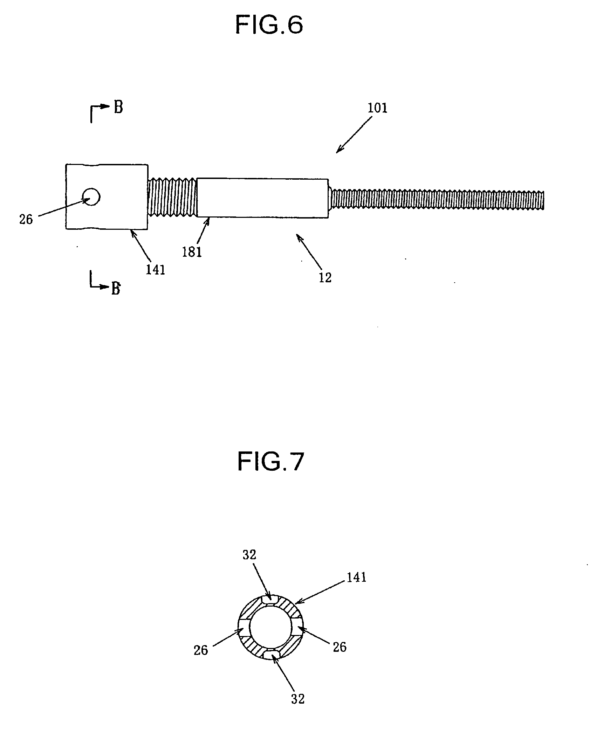

Next, modification examples of the anchor integrated liner will be described. FIGs. 6, 7 are explanatory views of a modification example 1 of the anchor integrated liner according to the embodiment. FIG. 6 shows a side view and FIG. 7 is a view seen in the direction of the B-B arrow. As shown in the drawings, in the anchor integrated liner 101 of the modification example 1, a screw part 181 of an anchor shaft part 12 is formed long and the screw part 181 is partly thread-milled. Further, a liner part 141 has recessions 32 in a crosswise direction of its horizontal cross section, and among them, a pair of the recessions 32 penetrate through a liner side surface and a blind hole to also serve as filling holes 26 for a filler. This structure is applicable to a case where grout between a concrete foundation and a base plate is long. Further, the liner part 141 can be rotated by the use of bar members fitted in the recessions 32 of the liner part 141.

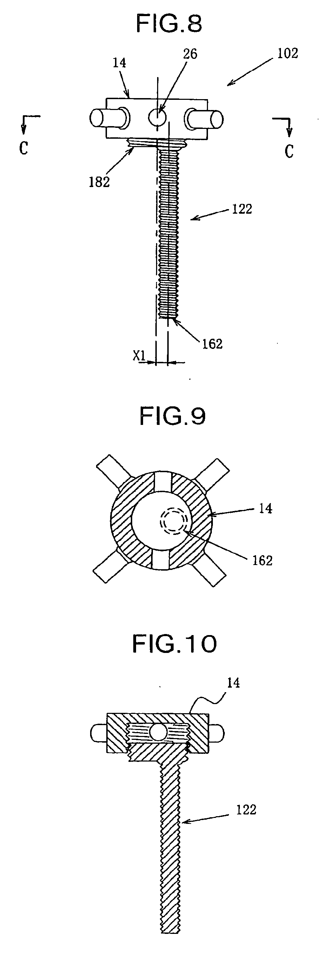

FIGs. 8 to 10 are explanatory views of a modification example 2 of the anchor integrated liner according to the embodiment. FIG. 8 shows a side view of the modification example 2 of the anchor integrated liner, FIG. 9 shows a view seen in the direction of the C-C arrow in FIG. 8, and FIG. 10 shows a cross-sectional view of the modification example 2 of the anchor integrated liner. As shown in the drawings, in the anchor integrated liner 102 of the modification example 2, a center axis of a screw part 182 of an anchor shaft part 122 and a blind hole 20 of a liner part 14 and a center axis of the shaft 162 are eccentric to each other by X1. Consequently, even when some obstacle such as a reinforcement exists in a concrete foundation in which the anchor shaft part 122 of the anchor integrated liner 102 is inserted, it is possible to embed the shaft 162 of the anchor shaft part 122 in a position so that the shaft 162 can keep clear of the obstacle, without cutting the reinforcement. The liner part 14 has the same structure and have the same operation and effects as those of the liner part 14 shown in FIGs. 1 to 3, and therefore description thereof will be omitted.

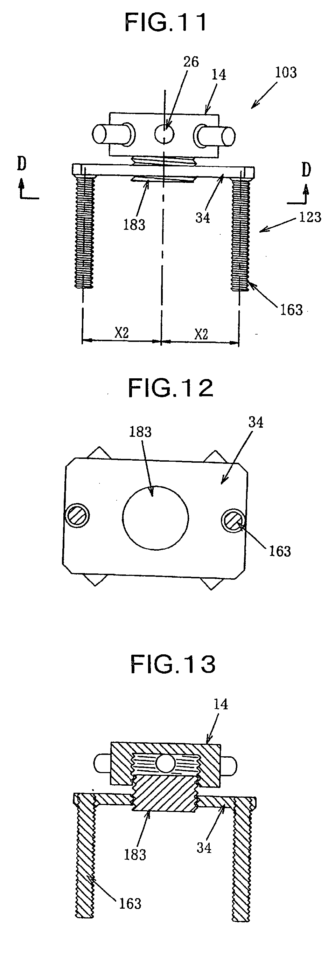

FIGs. 11 to 13 are explanatory views of a modification example 3 of the anchor integrated liner according to the embodiment. FIG. 11 shows a side view of the modification example 3 of the anchor integrated liner, FIG. 12 shows a view seen in the direction of the arrow D-D in FIG. 11, and FIG. 13 shows a cross-sectional view of the modification example 3 of the anchor integrated liner. As shown in the drawings, the anchor integrated liner 103 of the modification example 3 has a coupling member 34 provided between a screw part 183 and shafts 163 of an anchor shaft part 123. The coupling member 34 is a rectangular or circular plate, and it has, in its center, the screw part 183 screwed to a blind hole 20 of a liner part 14 and has, on its both ends, the two shafts 163 sandwiching the screw part 183. The center axes of the two shafts 163 are both eccentric from the center axis of the blind hole 20 of the liner part 14 and the screw part 163 of the anchor shaft part 123 by X2. Consequently, even when an obstacle such as a reinforcement exists in a concrete foundation in which the anchor shaft part 123 of the anchor integrated liner 103 is inserted, the shafts 163 of the anchor shaft part 123 can be embedded in positions so as to be capable of keeping clear of the obstacle, without cutting the reinforcement. Incidentally, the number of the anchor shaft parts is not limited to two but may be any plural number equal to at least two or more depending on the size of the coupling member. Consequently, the anchor integrated liner can be stably fixed in the concrete foundation. When the number of the shafts is two or more, an adhesive is preferably used for fixing the shafts 163. The liner part 14 has the same structure and the same operation and effects as those of the liner part 14 shown in FIGs. 1 to 3, and therefore description thereof will be omitted.

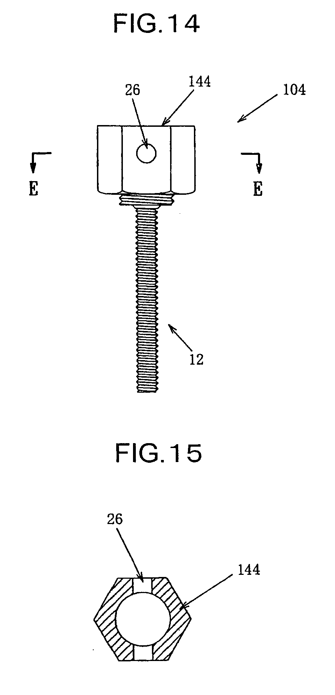

FIGs. 14, 15 are explanatory views of a modification example 4 of the anchor integrated liner according to the embodiment. FIG. 14 shows a side view of the modification example 4 of the anchor integrated liner, and FIG. 15 shows a view seen in the direction of the arrow E-E in FIG. 14. As shown in the drawings, a liner part 144 of the anchor integrated liner 104 of the modification example 4 has a hexagonal horizontal cross section. When the projections are formed in the cylindrical liner part, the projections become obstacles in a narrow liner installation place and the liner part cannot be sometimes rotated. Further, when the recessions are provided in the liner part, a special jig is necessary to rotate the liner part. Therefore, the liner part 144 is formed to have a horizontal cross section in a polygonal shape such as a hexagonal shape or a quadrangular shape, whereby the liner part 144 can be rotated even when the installation place is narrow. Further, a filling hole 26 for a filler is formed at least in one place or more of a side surface of the liner part 144.

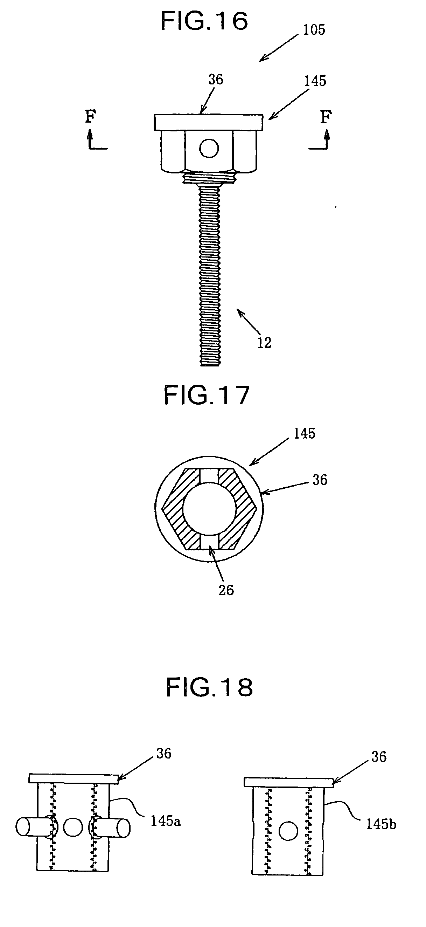

FIGs. 16 to 18 are explanatory views of a modification example 5 of the anchor integrated liner according to the embodiment. FIG. 16 shows a side view of the modification example 5 of the anchor integrated liner, and FIG. 17 is a cross-sectional view taken along the F-F line in FIG. 16. FIG. 18 is a side view of liner parts according to the modification example 5. As shown in FIG. 16, the liner part 145 of the anchor integrated liner 105 of the modification example 5 has a polygonal horizontal cross section and includes a plate 36 on a base plate mounting surface. Here, when the base plate is placed on the liner part 145, pressure on a pressure receiving surface of the liner part is preferably smaller in order to lighten a burden to the liner part due to a load. That is, a contact area between the liner part and the base plate is preferably wider. On the other hand, a screw diameter of a blind hole of the liner part only has to have a size large enough to endure the strength. Therefore, by making the diameter of the plate larger than the diameter of the liner part, it is possible to increase the contact area of the liner part without increasing the screw diameter of the liner part. Further, a filling hole 26 for a filler is formed at least in one place or more of a side surface of the liner part 145. Further, as shown in FIG. 18, a liner part (projections) 145a or a liner part (recessions) 145b is in a cylindrical shape through which a screw hole screwed to a screw part of an anchor shaft part penetrates, and includes the plate 36 on one opening on the base plate mounting surface side. The shape of the plate 36 is preferably circular or polygonal.

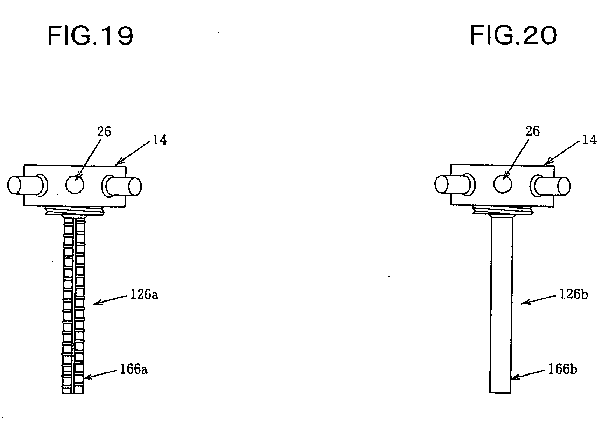

FIGs. 19, 20 are explanatory views of a modification example 6 of the anchor integrated liner according to the embodiment. As shown in FIG. 19, a surface of a shaft 166a of an anchor shaft part 126a is roughed like a rough-surface reinforcement. This increases a surface area of the shaft 166a and can increase its adhesiveness to an adhesive inserted in an opening of a concrete foundation. Alternatively, as shown in FIG. 20, a shaft 166b of an anchor shaft part 126b may have a surface of a round bar.

This embodiment describes the construction method of the anchor integrated liner of a wedge driving type, but an adhesive such as epoxy resin, polyester resin, or cement-based adhesive can be used for the construction. Further, this embodiment describes a case where the concrete foundation is an installation place, but the installation place is not limited to this but the present invention is applicable to a case where the installation place is a concrete floor or wall, or a steel pedestal floor or wall, or the like.

### [Industrial Applicability]

The anchor integrated liner of the present invention is applicable to position adjustment of a machine and the like installed on a base.

## Claims

1. An anchor integrated liner comprising:
an anchor shaft part which is provided with a shaft embeddable in a concrete foundation on which a base plate of a machine is installed and with a screw part; and
a liner part which is provided on an end portion of the anchor shaft part to serve as a jig for installing the machine, which is provided with a blind hole having an inside screw screwed to the screw part and with a smooth mounting surface for the base plate, and which is capable of screw-adjusting an installation position of the machine by having the blind hole screwed to the screw part,
wherein said anchor shaft part and said liner part are integrally formed, and
wherein a filling hole is provided at least in one place or more of a side surface of said liner part, the filling hole being for filling a filler in a hollow which is made between the blind hole and the screw part at the time of the screw-adjustment by the blind hole and the screw part.

2. An anchor integrated liner comprising:
an anchor shaft part which is provided with a shaft embeddable in a concrete foundation on which a base plate of a machine is installed and with a screw part; and
a liner part which is provided on an end portion of the anchor shaft part to serve as a jig for installing the machine, which is provided with a blind hole having an inside screw screwed to the screw part and with a smooth mounting surface for the base plate, and which is capable of screw-adjusting an installation position of the machine by having the blind hole screwed to the screw part,
wherein said anchor shaft part and said liner part are integrally formed,
wherein a filling hole is provided at least in one place or more of a side surface of said liner part, the filling hole being for filling a filler in a hollow which is made between the blind hole and the screw part at the time of the screw-adjustment by the blind hole and the screw part, and
wherein a center axis of the blind hole and the screw part and a center axis of the shaft are preferably eccentric to each other.

3. An anchor integrated liner comprising:
an anchor shaft part which is provided with a shaft embeddable in a concrete foundation on which a base plate of a machine is installed and with a screw part; and
a liner part which is provided on an end portion of the anchor shaft part to serve as a jig for installing the machine, which is provided with a blind hole having an inside screw screwed to the screw part and with a smooth mounting surface for the base plate, and which is capable of screw-adjusting an installation position of the machine by having the blind hole screwed to the screw part,
wherein said anchor shaft part and said liner part are integrally formed,
wherein a filling hole is provided at least in one place or more of a side surface of said liner part, the filling hole being for filling a filler in a hollow which is made between the blind hole and the screw part at the time of the screw-adjustment by the blind hole and the screw part,
wherein a coupling member is provided between the screw part and the shaft part in said anchor shaft part, and
wherein the number of the shafts attached to the coupling member is at least two or more.

4. The anchor integrated liner according to any one of claims 1 to 3, wherein said liner part has a polygonal horizontal cross section.

5. The anchor integrated liner according to any one of claims 1 to 3, wherein a plate larger than a horizontal cross-sectional area of said liner part is attached to a top of said liner part.

6. A machine installation method comprising:
forming an insertion hole in a part, of a concrete foundation, adjacent to an anchor bolt pressing a base plate of a machine;
inserting a shaft of an anchor integrated liner into the insertion hole so as to make a predetermined gap between a lower surface of a screw part of the anchor integrated liner and an upper surface of the concrete foundation, the anchor integrated liner including: an anchor shaft part provided with the shaft embeddable in the insertion hole and the screw part; and a liner part screwed to the screw part and having, on an upper surface, a mounting surface for the machine;
horizontally and vertically adjusting the mounting surface;
thereafter injecting a fixing material into the gap to form a fixed layer receiving a load in a liner axial direction;
adjusting an installation position by adjusting screwing movement of the liner part; and
installing the machine on an upper surface of the base plate.
